## Europäisches Patentamt

## European Patent Office

## Office européen des brevets

(19)

(11) Veröffentlichungsnummer: **0 158 682**
**B1**

(12) **EUROPÄISCHE PATENTSCHRIFT**

(45) Veröffentlichungstag der Patentschrift:
23.09.87

(21) Anmeldenummer: **84104109.8**

(22) Anmeldetag: **12.04.84**

(51) Int. Cl.⁴: **H 01 M 2/30,** H 01 M 2/02,
H 01 R 11/28

(54) **Elektrische Akkumulatoren.**

(43) Veröffentlichungstag der Anmeldung:
**23.10.85 Patentblatt 85/43**

(45) Bekanntmachung des Hinweises auf die Patenterteilung:
**23.09.87 Patentblatt 87/39**

(84) Benannte Vertragsstaaten:
**AT BE CH DE FR GB IT LI LU NL SE**

(56) Entgegenhaltungen:
CH-A-232 734
FR-A-1 183 357
FR-A-1 406 948
FR-A-2 295 577
GB-A-1 383 314
US-A-2 132 793
US-A-2 379 189
US-A-2 505 207
US-A-3 264 141

(73) Patentinhaber: **Accumulatorenwerke Hoppecke Carl Zoellner & Sohn GmbH & Co. KG, Bontkirchener Strasse 1 Postfach 1140, D-5790 Brilon 2 (DE)**

(72) Erfinder: **Cramer, Wilhelm, Am Heidfeld 1, D-5790 Brilon- Messinghausen (DE)**
Erfinder: **Hampe, Werner, D-3538 Marsberg- Helminghausen (DE)**
Erfinder: **Schrewe, Manfred, Ing. grad., Am Etzelsberg 32, D-5790 Brilon (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

LIBER, STOCKHOLM 1987

EP 0 158 682 B1

## Beschreibung

Gegenstand der Erfindung ist ein elektrischer Akkumulator mit einem Gehäuse mit einer Gehäuseseitenwand, die wenigstens eine Poldurchführungsöffnung für einen Zellenpol aufweist, wobei der Zellenpol eus einem als Flansch ausgebildeten Endableiter, der um die Poldurchführungsöffnung herum von innen an der Gehäuseseitenwand anliegt, sowie aus einem ein Kontaktteil für einen Kabelanschluß tragenden Gegenflansch besteht, der um die Poldurchführungsöffnung herum von außen an der Gehäuseseitenwand anliegt und durch die Poldurchführungsöffnung hindurch mit dem inneren Flansch durch Widerstandsschweißen elektrisch leitend verbunden ist.

Ein elektrischer Akkumulator dieser Art mit einem Gehäuse, in dem sich die elektrischen Zellen befinden, ist aus der FR-A-1 408 948 bekannt. Um die Spannung innerhalb dieses Gehäuses herauszuführen, ist die Gehäuseseitenwand des Gehäuses mit Poldurchführungsöffnungen versehen, in denen jeweils ein Zellenpol eingepaßt ist. Der Zellenpol besteht dabei jeweils aus einem Endableiter, der als Flansch ausgebildet ist und um die Poldurchführungsöffnung herum von innen an der Gehäuseseitenwand anliegt. Der Zellenpol besteht weiterhin aus einem zu der inneren Flansch korrespondierenden Gegenflansch, der um die Poldurchführungsöffnung herum von außen an der Gehäuseseitenwand anliegt. Zum Verbinden des inneren Flansches und des äußeren Gegenflansches miteinander weist der innere Flansch ein vorstehender Ringteil auf, das bündig in der Poldurchführungsöffnung zu liegen kommt. Korrespondierend zur mittleren Aussparung dieses Ringteils weist der äußere Gegenflansch einen im wesentlichen zylindrischen Vorsprung auf, der in die Ausnahmung des Ringteils hineingesteckt wird. Um eine Verbindung zwischen dem inneren Flansch und dem äußeren Gegenflansch herzustellen, werden diese durch Widerstandsschweißen elektrisch leitend miteinander verbunden. Der äußere Gegenflansch ist auf einem Vorsprung des Gehäuses abgestützt, um so etwas seine Stabilität zu erhöhen. Für den Kabelanschluß ist der äußere Gegenflansch mit einer einseitig offenen U-förmigen Ausnehmung versehen, in die mittels einer Schwalbenschwanzführung ein Kabelschuh am Ende eines Kabels von oben einsteckbar ist.

Aus der GB-A-1 383 314 ist ebenfalls ein elektrischer Akkumulator bekannt, in dessen Gehäuseseitenwand des Gehäuses Poldurchführungsöffnungen für die Aufnahme von Zellenpolen vorgesehen sind. Ebenso wie bei dem Zellenpol aus der FR-A-1 408 948 besteht dieser aus einem inneren Flansch und einem äußeren Gegenflansch, die durch die Poldurchführungsöffnung in der Gehäuseseitenwand hindurch ineinandergesteckt werden. Dabei liegt sowohl der innere Flansch als auch der äußere Gegenflansch um die Poldurchführungsöffnung herum an der Gehäuseseitenwand an. Als Kontaktteil für einen Kabelanschluß dient ein senkrecht von der Gehäuseseitenwand abstehendes Anschlußstück, des über eine Klemmvorrichtung mit dem äußeren Gegenflansch elektrisch leitend verbunden ist. Auch bei diesem bekannten elektrischen Akkumulator liegen die Zellenpole ungeschützt und frei an der Gehäuseseitenwand.

Aus der US-A-2 505 207 ist ein elektrischer Akkumulator mit in den Gehäuseseitenwänden angeordneten Zellenpolen bekannt. Diese Zellenpole bestehen aus einem an der Innenwand der Gehäuseseitenwand anliegenden Endableiter. Die Spannungsführung nach außen erfolgt mittels einer Schraube, die von außen durch die Gehäuseseitenwand hindurch in den Endableiter eingeschraubt wird, wobei zwischen dem Schraubenkopf und der Außenwand der Gehäuseseitenwand ein Kontektteil für einen Kabelenschluß festgeklemmt ist. Um zu verhindern, daß Elektrolytflüssigkeit aus dem Inneren des Gehäuses nach außen tritt, ist zwischem dem Endableiter und der Gehäuseseitenwand eine Dichtung angeordnet. Weiterhin sind die Zellenpole von einem Gehäuse mit einer Verschlußkappe umschlossen, wobei ein unterer Steg dieses Gehäuses, der einstückig mit der Gehäuseseitenwand ausgebildet ist, zugleich auch als Tragleiste für den Einbau des Akkumulators in einem Rahmen dient.

Ausgehend von einem elektrischen Akkumulator der eingangs angegebenen Art liegt der Erfindung die Aufgabe zugrunde, bei dem bekannten elektrischen Akkumulator einen Schutz für den Zellenpol vor mechanischen Beschädigungen zu schaffen.

Als technische Lösung wird mit der Erfindung vorgeschlagen, daß das Kontaktteil des äußeren Gegenflensches in horizonteler Richtung parallel zur Gehäuseseitenwand verläuft und daß der äußere Gegenflansch zusammen mit dem Kontaktteil innerhalb eines eine Tragleiste bildenden Gehäuses angeordnet ist, das eine stirnseitige Kabeldurchführungsöffnung aufweist.

Ein nach dieser technischen Lehre ausgebildeter elektrischer Akkumulator hat den Vorteil, daß die Zellenpole vor mechanischen Beschädigungen geschützt sind, und zwar dadurch, daß sie in einem Gehäuse engeordnet sind. Somit kann der Akkumulator selbst mit angeschlossenen Kabeln gefahrlos ein- und ausgebaut oder sonstwie transportiert werden. Das Gehäuse bildet gewissermaßen einen Schutzmantel um die Zellenpole. Darüber hinaus sind die Zellenpole durch das Gehäuse kurzschlußgeschützt. Schließlich bildet das Gehäuse aufgrund seiner waagerechten Ausbildung an der Gehäuseseitenwand eine Tragleiste, die die Handhabung des Akkumulators insbesondere beim Ein- und Ausbau sowie beim Transport erleichtert.

Vorteilhafte Weiterbildungen ergeben sich aus den Unteransprüchen.

Mit den Merkmalen der Ansprüche 2 bis 4 wird des Gehäuse vorteilhaft weitergebildet.

Mit den Merkmalen der Ansprüche 5 bis 7 wird das Kontaktteil des Zellenpols für einen Kabelanschluß weitergebildet, um so eine gute Kontaktierung zu erzielen, was zusammen mit dem äußeren Gehäuse eine jederzeit feste Verbindung auch bei großen mechanischen Beanspruchungen des Akkumulators gewährleistet. Es wird dabei vermieden, daß Stöße, die auf des Schutzgehäuse der Zellonpole einwirken, eine Lockerung des Kabelanschlusses zur Folge haben.

Zwei bevorzugte Ausführungsformen eines erfindungsgemäßen elektrischen Akkumulators sind anhand der Zeichnung näher beschrieben. In der Zeichnung zeigt:

Fig. 1 eine erste Ausführungsform einer Akkumulatorenzelle in einer ausschnittsweisen Seitenenansicht (Ansicht B gemäß fig. 2);

Fig. 2 dieselbe Akkumulatorenzelle in ausschnittsweiser Draufsicht (Ansicht A gemäß Fig. 1);

Fig. 3 dieselbe Akkumulatorenzelle im Schnitt entlang der Linie III-III gemäß Fig. 1;

Fig. 4 eine zweite Ausführungsform der Akkumulatorenzelle, dargestellt wie in Fig. 1 sowie

Fig. 5 dieselbe Akkumulatorenzelle im Schnit entlang der Linie V-V gemäß Fig. 4.

Bei den dargestellten Akkumuletorenzellen sind in einer Gehäuseseitenwand 13 des Zellenkastens, also unterhalb des nicht eigens dargestellten Zellendeckels, zwei horizontal (ggf. auch nur eine möglich) benachbart angeordnete Poldurchführungsöffnungen 12 im Bereich eines von der Gehäuseseitenwand 13 seitlich vorspringendes, horizontal angeordneten Gehäuses 8 vorgesehen. Die Rückwand dieses Gehäuses 8 wird von der Gehäuseseitewand 13 der Akkumulatorenzelle gebildet. Über- und unterhalb der Poldurchführungsöffnungen 12 erstrecken sich Seltenwände 24 und 25 des Gehäuses 8 in Form von parallel verlaufenden etwa gleich hohen Stegen, die einstückig mit der Gehäuseseitenwand 13 gebildet sind und Ausnehmungen 15 für Rastmittel 16 aufweisen. Die vierte Seitenwand des Gehäuses 8 wird von einer Verschlußkappe 14 gebildet, die auf die beiden Seitenwände 24 und 25 aufsteckbar ist, en ihrer Innenfläche die Rastmittel 16 trägt und mit einem Versteifungssteg 26 die Ausnehmung 15 in der Seitenwand 24 des Gehäuses 8 abdeckt.

Die untere Seitenwand 22 des Gehäuses 8 weist an ihrem freien Ende einen nach unten weisenden, in einer Ebene mit der Verschlußkappe 14 angeordneten Steg 27 auf, welcher an seinen Stirnkanten mittels einer Verstärkungsrippe 28 mit der Stirnkante der Seitenwand 25 und der Gehäuseseitenwand 13 einstückig verbunden ist.

Zwischen den beiden Poldurchführungen 12 kann immerhalb des Gehäuses 8 eine Trennwand 29 zur gegenseitigen Versteifung der beiden Seitenwände 24 und 25 sowie zur galvanischen Trennung der Zellenpole vorgesehen sein.

Der Steg 27 dient in Verbindung mit allen damit einstückig gebildeten Wandteilen des Gehäuses 8 als Trageleiste 7 der Akkumulatorenzelle. Eine gleichgestaltete Trageleiste kann auf der nicht dargestellten gegenüberliegenden Seitenwand der Akkumulatorenzelle vorgesehen sein.

Ein Zellenpol 30 besteht aus eines als Flansch 11 ausgebildeten Endableiter am seitlichen Ende einer der Stromableitung aus der Akkumulatorenzelle dienenden Brücke 10, sowie einem mit dem Flansch 11 durch die Poldurchführungsöffnung 12 hindurch elektrisch leitend verbundenen Gegenflansch 1 mit einem seitlich an ihn elektrisch leitend anschließenden Kontaktteil 17.

Der Flansch 11 liegt von innen um die Poldurchführungsöffnung 12 herum an der Gehäuseseitenwand 13 dichtend an Ebenso liegt der Gegenflansch 1 von außen um die Poldurchführungsöffnung 12 herum an der Gehäuseseitenwand 13 an und ist im Bereich der Poldurchführungsöffnung 12 durch Widerstandsschweißen mit dem Flansch 11 einstückig verbunden.

Die Widerstandsschweißung wird in bekannter Weise als Preßschweißung ausgeführt, bei der ohne Zuführung eines Zusatzwerkstoffes unter Druckenwendung der Flansch 11 gegen den Gegenflansch 1 im Bereich der Poldurchführungsöffnung 12 gepreßt wird, wobei en jeden der Flansche eine Elektrode angeschlossen ist, so daß ein Strom großer Stärke durch beide Flansche fließt. Hierbei erwärmen sich die Flansche aufgrund ihres elektrischen Widerstandes so weit, daß ihre Kontaktflächen einwandfrei miteinander auf der gesamten Kontaktfläche verschweißt werden, wobei en der Umfangslinie der Kontaktfläche beider Flansche austretendes geschmolzenes Flanschmaterial - in der Regel Blei - seitlich wegfließt und für eine besondere hohe Dichtigkeit zwischen den Flanschen und der Gehäuseseitenwend 13 sorgt. Bei dieser Art Poldurchführung wird auf einfachste Weise eine hohe Dichtigkeit und mechanische Festigkeit zwischen dem Zellenpol und dem Batteriegehäuse erreicht. - Der Zellenpol kann demnach von dem Zellenkasten abgenommen oder aufgesetzt werden, ohne daß die Poldurchführungen davon betroffen sind.

Der Gegenflansch 1 weist bevorzugte eine formschlüssig in das Gehäuse 8 hineinpassende Außenkontur auf und ist bevorzugt mit Positionselementen 9 in form von Haltenocken des Gehäuses 8 und korrespondierenden Ausnehmungen exakt an der dafür vorgesehenen Stelle des Gehäuses 8 einsetzbar und kann während des Herstellens der elektrisch leitenden Verbindung zwischen dem Gegenflansch 1 und dem Flansch 11 nicht mehr verrutschen.

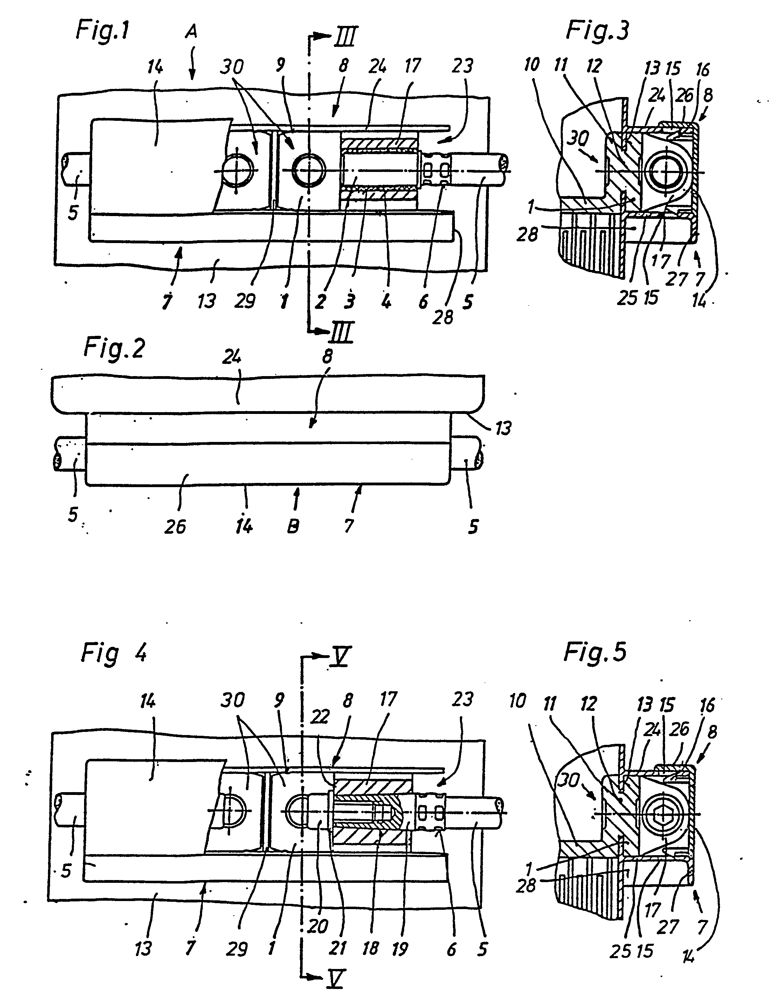

Bei der Ausführungsform gemäß Fig. 1 bis 3 ist als Kabelanschluß eine Steckverbindung vorgesehen, bei der das einstückig mit dem Gegenflansch 1 gebildete Kontaktteil 17 eine parallel zur Gehäuseseitenwand 13 angeordnete Durchgangsbohrung aufweist, in welche eine an sich bekannte Kontaktbuchse 3 mit Kontaktlamellen 4 eingegossen ist. Dies ist aus Fig. 1 in der rechten Hälfte zu erkennen. Dort ist die Verschlußkappe 14 weggebrochen und das Kontaktteil 17 in der Bohrungsmitte im Längsschnitt dargestellt. Ein zylindrischer Kontaktbolzen 2 ist als mit dem Kontaktteil 17 korrespondierendes Kontaktteil durch eine endseitige Quetschverbindung 6 mit einem Anschlußkabel 5 elektrisch leitend verbunden. Die Quetschverbindung ist in zwei parallelen Ebenen mit je sechs Quetschstellen ausgeführt.

Das Anschlußkabel 5 ist durch eine stirnseitige Kabeldurchführungsöffnung 23 des Gehäuses 8 geführt. Diese Kabeldurchführungsöffnung 23 kann durch völliges Fortlassen der Stirnwand des Gehäuses 8 gebildet werden.

Die zweite Poldurchführung ist spiegelsymmetrisch und ansonsten gleich ausgebildet, so daß an beiden Stirnenden des Gehäuses 8 je ein Anschlußkabel in entgegengesetzter Richtung austritt.

Der Kontaktbolzen 2 kann eine an sich beliebige Querschnittskontur aufweisen und insbesondere als Rund- oder Flachstecker ausgeführt sein.

Bei der Ausführungsform gemäß Fig. 4 und 5 kann eine Schraubverbindung zwischen dem Anschlußkabel 5 und dem Zellenpol 30 realisiert werden. Hierzu weist das Kontaktteil 17 eine konische Durchgangsbohrung 18 auf und auf das Ende des Anschlußkabels 5 ist ein korrespondierender konischer Kabelschuh mit einer stirnseitigen Gewindebohrung aufgepreßt. Am Schmalende der konischen Durchgangsbohrung 18 weist das Kontaktteil 17 eine Abstützfläche 22 auf, an der sich unter Zwischenlage einer Scheibe 21 eine Schraube 20 abstützt. Diese Schraube weist ein mit der Stirnbohrung im Kabelschuh 19 korrespondierendes Außengewinde auf und gestattet es, den Kabelschuh stramm und unlösbar in die konische Durchgangsbohrung 18 hineinzuziehen. Im übrigen sind die Poldurchführungen und die Trageleiste aber in gleicher Weise wie in dem Ausführungsbeispiel gemäß Fig. 1 bis 3 ausgeführt.

Die abnehmbare Verschlußkappe 14 gestattet die für die Montage oder Demontage des Kontaktbolzens oder des Kabelschuhs erforderliche Zugänglichkeit zum Inneren des Gehäuses 8.

**Bezugszeichenliste**

1 Gegenflansch
2 Kontaktbolzen
3 Kontaktbuchse
4 Kontaktlamelle
5 Anschlußkabel
6 Quetschstelle
7 Trageleiste
8 Gehäuse
9 Positionshalteelement
10 Brücke
11 Flansch
12 Poldurchführungsöffnung
13 Gehäuseseitenwand
14 Verschlußkappe
15 Ausnehmung
16 Rastmittel
17 Kontaktteil
18 konische Durchgangsbohrung
19 Kabelschuh
20 Schraube
21 Scheibe
22 Abstützfläche
23 Kabeldurchführungsöffnung
24 Seitenwand
25 Seitenwand
26 Steg
27 Steg
28 Verstärkungsrippe
29 Trennwand
30 Zellenpol
A Ansicht
B Ansicht

**Patentansprüche**

1. Elektrischer Akkumulator mit einen Gehäuse mit einer Gehäuseseitenwand (13), die wenigstens eine Poldurchführungsöffnung (12) für einen Zellenpol (30) aufweist, wobei der Zellenpol (30) aus einem als Flansch (11) ausgebildeten Endableiter, der um die Poldurchführungsöffnung (12) herum von innen an der Gehäuseitenwand (13) enliegt, sowie aus einem ein Kontaktteil (17) für einen Kabelanschluß tragenden Gegenflansch (1) besteht, der um die Poldurchführungsöffnung (12) herum von außen an der Gehäuseseitenwand (13) anliegt und durch die Poldurchführungsöffnung (12) hindurch mit dem inneren Flansch (11) durch Widerstandschweißen elektrisch leitend verbunden ist, dadurch gekennzeichnet, daß das Kontaktteil (17) des äußeren Gegenflansches (1) in horizontaler Richtung parallel zur Gehäuseseitenwand (13) verläuft und daß der äußere Gegenflansch (1) zusammen mit dem Kontaktteil (17) innerhalb einer eine Trageleiste (7) bildenden Gehäuses (8) angeordnet ist, das eine stirnseitige Kabeldurchführungsöffnung (23) aufweist.

2. Elektrischer Akkumulator nach Anspruch 1, dadurch gekennzeichnet, daß das Gehäuse (8) eine Verschlußkappe (14) aufweist.

3. Elektrischer Akkumulator nach Anspruch 2, dadurch gekennzeichnet, daß des Gehäuse (8) und die Verschlußkappe (14) korrespondierende Ausnehmungen (15) und Rastmittel (16) aufweisen.

4. Elektrischer Akkumulator nach einem der Ansprüche 1 bis 3, gekennzeichnet durch korrespondierende Positionshalteelemente (9) an dem Gehäuse (8) und des Zellenpol (30).

5. Elektrischer Akkumulator nach einem der Ansprüche 1 bis 4, dadurch gekennzeichnet, daß das Kontaktteil (17) für den Kabelanschluß als Steckkontakt ausgebildet ist.

6. Elektrischer Akkumulator nach Anspruch 5, dadurch gekennzeichnet, daß das Kontaktteil (17) eine eingegossene Kontaktbuchse (3) zum Aufnehmen eines Kontaktbolzens (2) aufweist.

7. Elektrischer Akkumulator nach Anspruch 5, dadurch gekennzeichnet, daß das Kontaktteil (17) eine konische Durchgangsbohrung (18) sowie am Schmalende dieser Durchgangsbohrung (18) eine Abstützfläche (22) für eine in die Durchgangsbohrung (18) axial eingreifende Schraube (20) aufweist.

**Revendications**

1. Accumulateur électrique avec un bac comportant une paroi latérale de bac (13) qui présente au moins une ouverture de passage (12) pour une borne de cellule (30), la borne (30) ayant une structure comprenant un raccord terminal constitué sous forme d'une joue (11) qui, autour du pourtour de l'ouverture de passage (12), adhère uniformément à partir de l'intérieur sur la paroi latérale (13) du bac, ainsi qu'une joue antagoniste (1) qui supporte une pièce de contact (17) pour le raccordement d'un câble et qui, autour du pourtour de l'ouverture de passage (12), adhère uniformément à partir de l'extérieur, sur la paroi latérale (13) du bac, en étant reliée en conduction électrique, par soudage par résistance, avec la joue intérieure (11) à travers l'ouverture de passage (12) pour la borne, caractérisé en ce que la pièce de contact (17) de la joue antagoniste extérieure (1) s'étend en direction horizontale parallèlement à la paroi latérale (13) du bac et en ce que la joue antagoniste extérieure (1) est, conjointement avec la pièce de contact (17), disposée à l'intérieur d'une enveloppe (8) formant une monture de manutention (7), cette enveloppe présentant une ouverture d'extrémité (23) pour le passage d'un câble.

2. Accumulateur électrique selon la revendication 1, caractérisé en ce que l'enveloppe (8) présente un capuchon de fermeture (14).

3. Accumulateur électrique selon la revendication 2, caractérisé en ce que l'enveloppe (8) et le capuchon de fermeture (14) comportent des évidements (15) et des organes d'enclenchement (16) qui se correspondent.

4. Accumulateur électrique selon l'une des revendications 1 à 3, caractérisé par des éléments correspondants de maintien de position (9) sur l'enveloppe (8) et la borne de cellule (30).

5. Accumulateur électrique selon l'une des revendications 1 à 4, caractérisé en ce que la pièce de contact (17) pour le raccordement d'un câble est constituée sous forme de contact à fiche.

6. Accumulateur électrique selon la revendication 5, caractérisé en ce que la pièce de contact (17) comporte une douille de contact enrobée (3) destinée à recevoir une broche de contact (2).

7. Accumulateur électrique selon la revendication 5, caractérisé en ce que la pièce de contact (17) présente un trou de passage conique (18) ainsi que, à l'extrémité étroite de ce trou de passage (18), une surface d'appui (22) pour une vis (20) s'engageant en direction axiale dans le trou de passage (18).

**Claims**

1. An electrical accumulator having a housing comprising one side wall (13) having at least one aperture (12) for the passage of a cell pole (30), the cell pole (30) consisting of an end terminal in the form of a flange (11) extending around the pole passage aperture (12) and bearing against the housing side wall (13) from inside, and of a companion flange (1) which bears a contact part (17) for a cable connection, extends around the pole passage aperture (12) and bears against the housing side wall (13) from outside and is electrically conductively connected to the inner flange (11) by resistance welding, characterised in that the contact part (17) of the outer companion flange (1) extends parallel to the housing side wall (13) in the horizontal direction and the outer companion flange (1) together with the contact part (17) is disposed inside a housing (8) which forms a carrier strip (7) and which has an aperture (23) at the end face for the passage of a cable.

2. A electrical accumulator according to claim 1, characterised in that the housing (8) has a closure cap (14).

3. An electrical accumulator according to claim, characterised in that the housing (8) and the closure cap (14) have corresponding recesses (15) and detent means (16).

4. An electrical accumulator according to any one of claims 1 to 3, characterised by corresponding position retaining elements (9) on the housing (8) and on the cell pole (30).

5. An electrical accumulator according to any one of claims 1 to 4, characterised in that the contact part (17) for the cable connection is constructed as a plug-in contact.

6. An electrical accumulator according to claim 5, characterised in that the contact part (17) has an integrally cast contact socket (3) to receive a contact pin (2).

7. An electrical accumulator according to claim 5, characterised in that the contact part (17) has a conical passage bore (18) and, at the narrow end of said bore (18), a supporting surface (22) for a screw (20) engaging axially in the passage bore (18).

0 158 682

Fig.1  Fig.3  Fig.2  Fig 4  Fig.5

1